# EUROPÄISCHE PATENTSCHRIFT

(11) **EP 3 271 069 B1**
(45) Veröffentlichungstag und Bekanntmachung des Hinweises auf die Patenterteilung: **29.04.2020**
(21) Anmeldenummer: 16710425.6
(22) Anmeldetag: 14.03.2016
(51) Int. Cl.: B01J 20/28, B01J 20/04, B01J 20/30, C02F 1/28, C02F 1/66, C01F 11/18, C02F 5/06, C09C 1/02, C02F 101/20

(54) **MATERIAL ZUR ENTSÄUERUNG UND/ODER AUFHÄRTUNG VON FLÜSSIGKEITEN, VERFAHREN ZU DESSEN HERSTELLUNG SOWIE VERWENDUNGEN**
MATERIAL FOR DEACIDIFYING AND/OR HARDENING LIQUIDS, A METHOD FOR PRODUCING SAME, AND USES
MATÉRIAU DE DÉSACIDIFICATION ET/OU DE DURCISSEMENT DE LIQUIDES, PROCÉDÉ DE PRODUCTION DE CELUI-CI ET UTILISATIONS

(30) Priorität: 19.03.2015 DE 102015003475
(43) Veröffentlichungstag der Anmeldung: 24.01.2018
(73) Patentinhaber: Rheinkalk GmbH, 42489 Wülfrath (DE)
(72) Erfinder: FISCHER, Uwe, 51373 Leverkusen (DE)
(74) Vertreter: Cohausz & Florack
(86) Internationale Anmeldenummer: PCT/EP2016/055418
(87) Internationale Veröffentlichungsnummer: WO 2016/146566

(56) Entgegenhaltungen:
- CH-A- 534 106
- DE-A1- 19 503 913

## Beschreibung

Die Erfindung betrifft ein Material zur Entsäuerung, Filtration und/oder Aufhärtung von Flüssigkeiten mit einem Massenanteil an Erdalkalicarbonat > 97%.

Zur filtrativen Entsäuerung von Flüssigkeiten, insbesondere Wasser, werden die verschiedensten Materialien eingesetzt. Mit Entsäuerung wird die Beseitigung von aggressiver Kohlensäure aus Flüssigkeiten bezeichnet. Insbesondere für Trink- und Brauchwässer ist die Einstellung des Kalk-Kohlensäure-Gleichgewichtes von großer Bedeutung. Wässer mit höheren Gehalten an Kohlensäure als dies dem Gleichgewicht entspricht, sind nämlich für einige Werkstoffe korrosiv. Beispielsweise werden ungeschützte Systeme aus dem Werkstoff Eisen korrodiert. Natürliche Wässer sind häufig nicht im Kalk-Kohlensäure-Gleichgewicht. Bei der Mischung von Wässern tritt häufig ein Mischwasserproblem durch aggressive Kohlensäure auf. Eine Aufbereitung dieser aggressiven Wässer ist erforderlich.

Als geeignete Filtermaterialien haben sich Materialien auf Basis von Calciumcarbonat (CaCO₃) erwiesen. Diese Materialien werden üblicherweise als Filterschicht in offenen oder geschlossenen Filteranlagen eingesetzt. Durch Umsetzung mit der im Wasser enthaltenen Kohlensäure wird das zu behandelnde Wasser auf filtrativem Wege entsäuert.

Für die Entsäuerung und Filtration von Quell-, Brunnen- und Oberflächenwasser, insbesondere Talsperrenwasser, muss das Filtermaterial aus Gründen des Gesundheitsschutzes besondere Anforderungen an die Reinheit erfüllen.

Die Anforderungen sind zum Beispiel festgelegt in Norm DIN 2000, der TrinkwasserVerordnung und der Zusatzstoffverkehrsverordnung. Weitere Anwendungsbereiche sind die Entsäuerung und wenn erforderlich Filtration, Entsäuerung und Filtration von Füllwasser für Schwimm- und Badebecken, Filtration und pH-Wert-Stabilisierung bei der Aufbereitung von Schwimm- und Badebeckenwasser sowie Aufhärtung von Destillat und Permeat für die Nutzung als Trinkwasser.

Ein weiteres Anwendungsgebiet ist die Enteisenung und Entmanganung, also die Entfernung von 2-wertigen Verbindungen des Eisens und des Mangans, aus Wässern. Zu diesem Zweck weisen Wasseraufbereitungsanlagen in der Regel eine Belüftungsvorrichtung auf. Während Oberflächenwasser in der Regel keine oder nur geringe Mengen dieser Metallverbindungen enthalten, können im Grundwasser dagegen höhere Mengen von Eisen-(II)- und Mangan-(II)-Verbindungen zu finden sein. In hohen Mengen können diese Verbindungen toxisch wirken, so dass sie aus den Wässern entfernt werden müssen. Geringe Gehalte an Eisen(II)- und Mangan(II)-Verbindungen sind an sich zwar nicht toxisch. Jedoch bilden sie in Gegenwart von Sauerstoff schwer lösliche rotbraune bis schwarze Oxidhydrate. Aus diesem Grund müssen auch sie vor einer Verwendung aus den Wässern entfernt werden.

Trinkwasser darf, entsprechend den gesetzlichen Vorschriften, keine oder nur sehr geringe Mengen Eisen(II)- und Mangan(II)-Verbindungen enthalten. Die Grenzwerte für Trinkwasser betragen für Eisen 0,2 mg/dm³ und für Mangan 0,05 mg/dm³. Für Trinkwasser in Deutschland müssen die gesetzlichen Vorgaben der dt. Trinkwasserverordnung, (Norm DIN 2000) erfüllt werden. Neben Trinkwasser wird auch Brauchwasser vor Verwendung meistens aufbereitet, damit es frei von höheren Gehalten dieser Verbindungen ist.

Für den Einsatz in Filteranlagen ist für einen sicheren, wartungsarmen und wirtschaftlich günstigen Betrieb auch eine stabile Kornstruktur des Materials erforderlich. Bekannt ist beispielsweise kristallines Calciumcarbonat aus Devonvorkommen oder Juravorkommen als splittiges Material in verschiedenen Kornklassen einzusetzen.

Die chemische Abbindung der aggressiven Kohlensäure erfolgt mit kristallinem Calciumcarbonat nach folgender Gleichung:

CO₂ + CaCO₃ + H₂O → Ca(HCO₃)₂

Vorteilhaft an dieser Vorgehensweise ist, dass Überreaktionen vermieden werden können. Auch bei neuen Filterfüllungen ist eine zu starke Abbindung nicht möglich. Nachteilig bei dieser Art der Entsäuerung ist jedoch, dass eine lange Einwirkungszeit für die Bindung der aggressiven Kohlensäure bis zum Gleichgewicht notwendig ist. Hierdurch werden große Füllmengen und damit große Filteranlagen benötigt. Die Anwendung ist deshalb auf Anlagen für kleinere Wassermengen beschränkt. Ein weiterer Nachteil besteht darin, dass bei splittigkristallinem Korn, aufgrund der glatten Kristallflächen die Reaktivität verringert ist. Für die Entsäuerung müssen daher verlängerte Kontaktzeiten berücksichtigt werden. Außerdem weisen die Kalksteinkörnungen einen unerwünschten Staubgehalt auf.

Zur Verbesserung der chemischen Reaktionsfähigkeit wird auch ein Calciumcarbonat mit einem Anteil an Magnesiumoxid als poröses Filtermaterial eingesetzt. Es dient zur Entsäuerung von kohlensaurer, aggressiver Wässer auf filtrativem Wege. Wegen seiner hohen Reaktionsfähigkeit ist der spezifische Verbrauch besonders günstig. Der Einsatz erfolgt unter anderem in Schnellfilteranlagen zur Trinkwassergewinnung. Bei Einsatz dieses Materials in Filteranlagen können, bedingt durch Überalkalität des Wassers, Probleme durch Verbackungen der Körner auftreten.

Es ist auch versucht worden, andere Kalke in geeigneter Körnung für die Entsäuerung und Filtration von Wasser einzusetzen, zum Beispiel Korallenkalke. Wegen der darin enthaltenen Verunreinigungen besteht aber die Gefahr, dass die Filterschüttung mikrobiologisch kontaminiert wird, so dass hygienische Probleme mit dem Trinkwasser auftreten. Abhilfe könnte durch thermische Behandlung dieser Kalke geschaffen werden (Totbrennen), was aber mit hohen Kosten verbunden ist.

Aus der DE 195 03 913 A1 ist ein Verfahren zur Entsäuerung und Filtration von Wasser mit einem körnigen chemisch reagierenden Filtermaterial mit einem Massenanteil an Erdalkalicarbonat von >97% bekannt, in dem als Filtermaterial ein durch Recarbonatisierung von Granalien aus Erdalkalicarbonat, Erdalkalihydroxid und Wasser erhaltenes Material eingesetzt wird.

Das beschriebene Filtermaterial liefert bereits sehr gute Ergebnisse bei der Entsäuerung und Filtration von Wasser. So weist es bei stabiler Kornstruktur einen hohen Reinheitsgrad auf und staubt nicht. Ferner kann mit ihm verhindert werden, dass durch das Filtermaterial Fremdstoffe in das Wasser gelangen, und es kann sicher gestellt werden, dass auch nach der Behandlung nur Stoffe enthalten sind, die das Wasser von Natur aus mit sich bringt.

Als nachteilig an diesem Filtermaterial hat sich jedoch erwiesen, dass es bei neuen Filtermassen während der Einfahrphase anfangs für einige Zeit zu einer Überalkalisierung kommen kann. So kann der pH-Wert in Abhängigkeit von der Lage des Gleichgewichts beispielsweise um etwa 0,5 ansteigen. Dies kann dadurch verhindert werden, dass das Filtermaterial chargenweise eingebracht wird. Hierdurch wird allerdings die Einfahrzeit verlängert.

Weiter nachteilig an diesem Filtermaterial ist, dass es nur bedingt für die Aufbereitung von eisen- und manganhaltigen Flüssigkeiten eingesetzt werden kann. Die Abscheidung größerer Mengen an diesen Verbindungen kann nämlich zu einer teilweisen Blockierung der Kornoberfläche führen wodurch die Entsäuerung behindert wird.

Der Erfindung liegt die Aufgabe zu Grunde ein Filtermaterial bereitzustellen, mit dem die oben beschriebenen Nachteile vermieden werden können. Insbesondere soll auch bei neuen Filtermassen, während der Einfahrphase eine Überalkalisierung vermieden werden können. Zudem soll sich das Filtermaterial auch zur Filtration von Flüssigkeiten mit höheren Eisen- und Mangangehalten eignen.

Diese Aufgabe wird erfindungsgemäß durch die Bereitstellung eines Materials gelöst, das mindestens 97 Gew.% Erdalkalicarbonat enthält, wobei der freie Calciumoxid-Gehalt des Materials 0,3 Gew.% oder weniger beträgt und die Korngruppe des Materials von 0,1 bis 1,8 mm beträgt, wobei der Gehalt an Überkorn und an Unterkorn bei 10 Gew.% oder weniger, bezogen auf das Gesamtgewicht des Materials, liegt, und wobei das Material in Form von Granalien vorliegt.

Der Gehalt an Erdalkalicarbonat sowie der Calciumoxid-Gehalt beziehen sich jeweils auf das Gesamtgewicht des Materials.

Die Korngruppe kann beispielsweise wie in Norm DIN EN 12901, insbesondere in Norm DIN EN 12901:2000-1, beschrieben, definiert sein. Danach versteht der Fachmann unter Korngruppe alle Korngrößen eines Materials, die sich zwischen zwei Siebweiten befinden. Beispiele für Siebweiten sind in Norm DIN ISO 3310-1, insbesondere in Norm DIN ISO 3310-1:2001-09, aufgeführt. Dort werden die Siebweiten auch als Nennmaschenweite bezeichnet. Es sind jedoch auch andere Siebweiten denkbar, beispielsweise können die Siebweiten, die eine Korngruppe begrenzen, auch theoretische Siebweiten sein. Die Korngruppe kann beispielswiese in der Form 0,1 mm bis 1,8 mm oder in der Form 0,1/1,8 mm angegeben werden. Die Korngruppe wird erfindungsgemäß gemäß Norm DIN EN 12902:2005-02 bestimmt. Insbesondere kann die Korngruppe durch Bestimmung einer Korngrößenverteilung bestimmt werden. Beispielsweise können aus einer Korngrößenverteilung zwei Korngrößen als Siebweiten ausgewählt werden, zwischen denen sich die Korngruppe befindet. Eine Korngrößenverteilung kann gemäß Norm DIN EN 12902, insbesondere Norm DIN EN 12902:2005-02, bestimmt werden. Die Korngrößenverteilung kann durch Siebung, insbesondere gemäß Norm ISO 2591-1, insbesondere gemäß Norm ISO 2591-1:1988, bestimmt werden. Die hierfür herangezogenen Siebe werden auch als Prüfsiebe bezeichnet und verfügen über unterschiedliche Siebweiten oder Nennweiten. Für pulverförmige Materialien kann die Korngrößenverteilung auch mit einem Laserdiffraktometer bestimmt werden. Dies kann gemäß Norm ISO 13320-1, insbesondere gemäß Norm ISO 13320:2009, durchgeführt werden. Gemäß den angeführten Methoden kann auch der Unterkornanteil der Korngruppe, also der Massenanteil in Gew.% eines körnigen Materials, der das Sieb mit der kleinsten Siebweite für die jeweilige Korngruppe passiert, bestimmt werden. Ebenso kann gemäß den beschriebenen Methoden der Überkornanteil, also der Massenanteil in Gew.% eines Korngemenges, der von dem Sieb mit der größten Siebweite für die jeweilige Korngruppe zurückgehalten wird, bestimmt werden.

Erfindungsgemäß liegt der Gehalt an Überkorn und an Unterkorn für eine festgelegte Korngruppe des Materials bei 10 Gew.% oder weniger, bezogen auf das Gesamtgewicht des Materials.

Überraschend wurde gefunden, dass es bei Verwendung des erfindungsgemäßen Materials möglich ist die oben diskutierten Nachteile aus dem Stand der Technik zu vermeiden. So kann bei Verwendung des Materials auch bei neuen Filtermassen während der Einfahrphase eine Überalkalisierung vermieden werden. Mithin ist es bei dem erfindungsgemäßen Material nicht mehr notwendig die Einfüllung in die Aufbereitungsanlagen stufenweise durchzuführen. Stattdessen steigt der pH-Wert während des Einfüllens nur unwesentlich an. Hierdurch kann die Einfahrzeit deutlich reduziert werden. Das erfindungsgemäße Material eignet sich daher auch für die Aufbereitung von weichen Wässern und für die Verwendung in kleinen Anlagen. Es wird vermutet, dass dieser Effekt insbesondere auf den geringen Calciumoxid-Gehalt in dem erfindungsgemäßen Material zurückzuführen ist. Erfindungsgemäß beträgt dieser Gehalt 0,3 Gew.% oder weniger, vorzugsweise von 0,2 bis 0,01 Gew.% und insbesondere von 0,1 bis 0,01 Gew.%. Dieser geringe Calciumoxid-Gehalt kann erfindungsgemäß dadurch erhalten werden, dass die Herstellung des Materials eine zweifache Recarbonatisierung kombiniert mit einer Aussiebung auf eine Korngruppe von 0,1 bis 1,8 mm umfasst.

Unter "Calciumoxid-Gehalt" wird erfindungsgemäß der freie Calciumoxid-Gehalt verstanden. Der Calciumoxid-Gehalt im Material kann nach dem Fachmann bekannten Messmethoden bestimmt werden, beispielsweise mittels Leitfähigkeit. Der Calciumoxid-Gehalt im Material wird erfindungsgemäß nach Norm DIN EN 12485:2010-08 bestimmt.

Überraschend wurde gefunden, dass es möglich ist den durch eine erste Recarbonatisierung verringerten Calciumoxid-Gehalt in dem Material noch weiter zu verringern, wenn sich an diesen ersten Recarbonatisierungsschritt eine Aussiebung auf eine Korngruppe von 0,1 bis 1,8 mm gefolgt von einem zweiten Recarbonatisierungsschritt anschließt. Hierdurch kann der Calciumoxid-Gehalt in dem Material auf weniger als 0,3 Gew.% reduziert werden.

Durch die Aussiebung kann ein Material mit einer Korngruppe von 0,1 bis 1,8 mm erhalten werden. Gemäß einer bevorzugten Ausführungsform der Erfindung weist das Material eine Korngruppe von 0,2 bis 1,7 mm, weiter bevorzugt von 0,5 bis 1,6 mm auf. Gemäß einer weiteren bevorzugten Ausführungsform weist das Material eine Korngruppe von 0,71 bis 1,25 mm auf.

Ein weiterer Vorteil der zweifachen Recarbonatisierung liegt darin, dass mit dem hierdurch erhaltenen Material ein stabilerer Filterbetrieb ermöglicht wird.

Gemäß einer weiteren bevorzugten Ausführungsform des Materials enthält das Material mindestens 98 Gew.% Erdalkalicarbonat. Gemäß einer weiteren bevorzugten Ausführungsform des Materials enthält das Material mindestens 99 Gew.% Erdalkalicarbonat. Gemäß einer bevorzugten Ausführungsform der Erfindung enthält das in dem Material enthaltene Erdalkalicarbonat Calciumcarbonat und/oder Magnesiumcarbonat.

Gemäß einer weiteren bevorzugten Ausführungsform der Erfindung enthält das in dem Material enthaltene Erdalkalicarbonat eine Mischung aus Calciumcarbonat und Magnesiumcarbonat.

Vorzugsweise enthält das in dem Material enthaltene Erdalkalicarbonat mindestens 90 Gew.%, vorzugsweise mindestens 95 Gew.%, weiter bevorzugt mindestens 97 Gew.%, noch weiter bevorzugt mindestens 98 Gew.%, noch weiter bevorzugt mindestens 99 Gew.% Calciumcarbonat, bezogen auf die Gesamtmenge an Erdalkalicarbonat. Insbesondere enthält das in dem Material enthaltene Erdalkalicarbonat 97 bis 99,9 Gew.%, weiter bevorzugt 98 bis 99 Gew.%, Calciumcarbonat, bezogen auf die Gesamtmenge an Erdalkalicarbonat.

Insbesondere kann das in dem Material enthaltene Erdalkalicarbonat Magnesiumcarbonat in einer Menge von 0,01 Gew.% bis 10 Gew.%, bevorzugt 0,1 Gew.% bis 5 Gew.%, weiter bevorzugt 0,2 Gew.% bis 2 Gew.%, bezogen auf die Gesamtmenge an Erdalkalicarbonat, enthalten.

Mit einem Material, das Calciumcarbonat und/oder Magnesiumcarbonat enthält, können die Vorgaben für Filtermaterialien für Trinkwasser erfüllt werden. Ferner kann bei Verwendung der genannten Mengen an Calciumcarbonat und/oder Magnesiumcarbonat ein besonders wirksames Material erhalten werden.

Erfindungsgemäß liegt das Material in Form von Granalien vor. Dies erlaubt eine besonders einfache und staubfreie Handhabung, vor allem beim Befüllen der Filteranlagen.

Praktische Versuche haben ergeben, dass mit dem erfindungsgemäßen Material eine besonders effiziente Ausnutzung der Entsäuerungskapazität der in dem Material enthaltenen Bestandteile erzielt werden kann. So konnten im Vergleich zu den aus der DE 195 03 913 A1 bekannten Filtermaterialien 10% bis 20%, in manchen Fällen auch mehr als 20%, bessere Verbrauchswerte erzielt werden. Der tatsächliche Verbrauch entspricht somit nahezu dem berechneten.

Es wird vermutet, dass die hohe Kapazität des Materials zumindest teilweise auf die Siebung auf eine Korngruppe von 0,1 bis 1,8 mm zurückzuführen ist. Diese führt dazu, dass die effektive Korngröße etwa 30 bis 40 Prozent geringer als bei den in der DE 195 03 913 A1 beschriebenen Filtermaterialien ist. Die effektive Korngröße ist beispielsweise in Norm DIN EN 12901, insbesondere in Norm DIN EN 12901:2000-1, beschrieben. Danach versteht der Fachmann unter der effektiven Korngröße die theoretische Siebweite, bei der 10 Gew.% des Massenanteils der Probe das Sieb passieren. Die effektive Korngröße kann beispielsweise gemäß Norm DIN EN 12902, insbesondere gemäß Norm DIN EN 12902:2005-02, bestimmt werden. Insbesondere kann die effektive Korngröße durch Bestimmung einer Korngrößenverteilung bestimmt werden.

Ein weiterer Vorteil der geringen effektiven Korngröße des erfindungsgemäßen Materials liegt darin, dass sie eine wirksamere Filtration ermöglicht. Hierdurch kann das Material auch für die Behandlung von Flüssigkeiten, die schlecht entfernbare Bestandteile enthalten, wie beispielsweise Eisen- und/oder Mangan enthaltende Flüssigkeiten, vorzugsweise Eisen- und/oder Mangan enthaltendes Wasser, eingesetzt werden. Das erfindungsgemäße Material eignet sich insbesondere auch zur Behandlung von Flüssigkeiten, insbesondere Wasser, mit Eisengehalten von mehr als 0,2 mg/dm³, vorzugsweise von 1 bis 2 mg/dm³ und/oder mit Mangangehalten von mehr als 0,05 mg/dm³, vorzugsweise von 0,2 bis 0,4 mg/dm³.

Darüber hinaus konnte festgestellt werden, dass sich bei der Verwendung des erfindungsgemäßen Materials überraschenderweise eine Eintrübung der behandelten Flüssigkeiten im Vergleich zu Materialien aus dem Stand der Technik reduzieren lässt.

Als Maß für die Eintrübung von Flüssigkeiten kann in der Wasseraufbereitung die Nephelometric Turbidity Unit (NTU) verwendet werden. Sie ist die Einheit einer mit einem kalibrierten Nephelometer gemessenen Trübung einer Flüssigkeit. Praktische Versuche haben ergeben, dass mit dem erfindungsgemäßen Material der NTU-Wert im Vergleich zu den aus der DE 195 03 913 A1 bekannten Materialien um etwa 20% bis 40% verbessert werden kann. Der NTU-Wert kann beispielsweise nach Norm DIN EN ISO 7027 (C2) 2000-4 gemessen werden. Die in dieser Norm angegebene Messmethode für FNU-Werte und/oder FAU Werte kann gleichermaßen auch zur Bestimmung von NTU-Werten, bezogen auf Formazin, verwendet werden.

Eine geringe Trübung der behandelten Flüssigkeiten ist vorteilhaft für ihre Qualifizierung beispielsweise als Trinkwasser. Der Grund hierfür liegt unter anderem darin, dass sich an freie Partikel mikrobiologisch wirksame Verbindungen anheften können was einen negativen Einfluss auf die biologische Wasserqualität haben kann.

Es war nicht vorhersehbar, dass mit dem erfindungsgemäßen Material eine Verbesserung der Eintrübungswerte erzielt werden kann.

Als Ausgangsmaterialien für die Herstellung des Materials können gemäß einer bevorzugten Ausführungsform der Erfindung im Wesentlichen Erdalkalicarbonat, Erdalkalihydroxid und/oder Erdalkalioxid verwendet werden. Gemäß einer Ausführungsform der Erfindung werden als Ausgangsmaterialien für die Herstellung des Materials im Wesentlichen Erdalkalicarbonat und Erdalkalihydroxid verwendet. Alternativ kann statt Erdalkalihydroxid ein Erdalkalioxid oder eine Mischung von Erdalkalihydroxid und Erdalkalioxid verwendet werden. Bevorzugt werden Kalksteinmehl und/oder Kalkhydrat, insbesondere Weißkalkhydrat, als Ausgangsmaterialien eingesetzt. Weiterhin kann für die Herstellung des Materials eine Flüssigkeit, bevorzugt Wasser, verwendet werden.

Gemäß einer weiteren bevorzugten Ausführungsform der Erfindung enthält das als Ausgangsmaterial verwendete Erdalkalicarbonat mindestens 90 Gew.%, vorzugsweise mindestens 95 Gew.%, insbesondere von 97 bis 99 Gew.%, weiter bevorzugt von 98 bis 99 Gew.%, Calciumcarbonat. Gemäß einer weiteren bevorzugten Ausführungsform enthält das als Ausgangsmaterial verwendete Erdalkalihydroxid mindestens 90 Gew.%, vorzugsweise von 92 bis 99 Gew.%, Calciumhydroxid. Vorzugsweise enthält das als Ausgangsmaterial verwendete Erdalkalioxid mindestens 90 Gew.%, bevorzugt 92 bis 99 Gew.%, Calciumoxid.

Die Verwendung reiner Ausgangsmaterialien hat den Vorteil, dass hierdurch ein Material mit einem hohen Reinheitsgrad erhalten werden kann. Ein derartiges Material eignet sich somit besonders zur Gewinnung und/oder Aufbereitung von Trinkwasser.

Gemäß einer bevorzugten Ausführungsform der Erfindung weist das Material eine im Wesentlichen kugelige Kornform auf. Gemäß einer weiteren bevorzugten Ausführungsform weist das Material eine kugelige Kornform auf. Derartige Kornformen ermöglichen die Bildung dichter Kugelpackungen. Dies ist beispielsweise beim Einsatz des Materials als Filtermaterial von Vorteil, da hierdurch eine besonders feine Filterung ermöglicht wird. Ferner ist eine hohe Packungsdichte aufgrund des geringeren Packungsvolumens für den Transport und Lagerung des Materials vorteilhaft. So eignet sich das erfindungsgemäße Material beispielsweise auch für Filter, die mit Vorortsilos ausgerüstet sind und bei denen die Anlieferung mit Silofahrzeugen erfolgt.

Aufgrund ihrer hohen Packungsdichte kann das Material auch ein hohes Schüttgewicht von beispielsweise 1,1 bis 1,3 g/cm³ aufweisen.

Das erfindungsgemäße Material weist vorzugsweise eine hohe spezifische Oberfläche auf. Insbesondere kann das erfindungsgemäße Material eine spezifische Oberfläche, insbesondere eine BET-Oberfläche, von beispielsweise mindestens 3,5 m²/g, vorzugsweise von 3,5 bis 5,5 m²/g und insbesondere von 4 bis 5 m²/g, aufweisen. Die spezifische Oberfläche kann beispielsweise nach dem BET-Verfahren gemäß Norm ISO 9277, insbesondere gemäß Norm ISO 9277:2010, bestimmt werden. Hierdurch weist das Material eine hohe Aktivität auf. Zudem können besonders gute Abscheideleistungen bei der Filtration erzielt werden. Insgesamt zeigt sich, dass das erfindungsgemäße Material alle wesentlichen Eigenschaften besitzt, die es zu einem in der Anwendung einfachen und gleichzeitig reaktiven Filtermaterial machen. So werden die Vorteile eines einfachen Einsatzes, wie es ein dichter Massenkalk bietet, mit der hohen Reaktivität eines porösen Filtermaterials vereint.

Ein weiterer Gegenstand der vorliegenden Erfindung ist ein Verfahren zur Herstellung des erfindungsgemäßen Materials umfassend folgende Schritte:
a) Granulieren einer Mischung enthaltend Erdalkalicarbonat, Erdalkalihydroxid und/oder Erdalkalioxid zu einem Granulat;
b) Recarbonatisierung des Granulats durch in Kontakt bringen mit einem kohlenstoffdioxidhaltigen Gas;
c) Siebung auf eine nach der Norm DIN EN 12902:2005-02 bestimmte Korngruppe von 0,1 bis 1,8 mm, wobei der Gehalt und Überkorn und an Unterkorn des Materials bei 10 Gew.% oder weniger, bezogen auf das Gesamtgewicht des Materials, liegt;
d) erneute Recarbonatisierung des Granulats durch in Kontakt bringen mit einem kohlenstoffdioxidhaltigen Gas,
wobei die Schritte a) bis d) nacheinander durchgeführt werden, und wobei die erneute Recarbonatisierung in Schritt d) so lange fortgesetzt wird bis der nach der Norm DIN EN 12485:2010-08 bestimmte freie Calciumoxid-Gehalt des Granulats 0,3 Gew.% oder weniger beträgt.

Vorzugsweise wird das Granulieren in Schritt a) in Gegenwart einer Flüssigkeit, insbesondere Wasser, durchgeführt. Vorteilhafterweise wird das Granulieren in Schritt a) in Gegenwart von 1 bis 50 Gew.%, insbesondere 5 bis 20 Gew.%, Wasser, bezogen auf die Gesamtmenge an Erdalkalicarbonat, Erdalkalihydroxid und/oder Erdalkalioxid, durchgeführt.

Im erfindungsgemäßen Verfahren gilt für die Bedeutung der Korngruppe, ihre Bestimmung und für das Über- und das Unterkorn für eine festgelegt Korngruppe gleichermaßen das oben für das erfindungsgemäße Material Gesagte.

Die zu granulierende Mischung in Schritt a) enthält gemäß einer bevorzugten Ausführungsform der Erfindung mindestens 90 Gew.%, bevorzugt mindestens 95 Gew.%, weiter bevorzugt mindestens 99 Gew.%, Erdalkalicarbonat, Erdalkalihydroxid und/oder Erdalkalioxid.

Gemäß einer bevorzugten Ausführungsform des Verfahrens enthält die zu granulierende Mischung in Schritt a) mindestens 90 Gew.%, bevorzugt mindestens 95 Gew.%, weiter bevorzugt mindestens 99 Gew.%, Calciumcarbonat, Calciumhydroxid und/oder Calciumoxid.

Gemäß einer weiteren bevorzugten Ausführungsform des Verfahrens enthält die zu granulierende Mischung in Schritt a) mindestens 90 Gew.%, bevorzugt mindestens 95 Gew.%, weiter bevorzugt mindestens 99 Gew.%, Kalksteinmehl, Kalkhydrat und/oder Weißfeinkalk. Als Kalkhydrat kann insbesondere Weißkalkhydrat eingesetzt werden.

Gemäß einer weiteren bevorzugten Ausführungsform des Verfahrens enthält die zu granulierende Mischung in Schritt a) mindestens 90 Gew.%, bevorzugt mindestens 95 Gew.%, weiter bevorzugt mindestens 99 Gew.%, Erdalkalicarbonat und Erdalkalihydroxid.

Gemäß einer weiteren bevorzugten Ausführungsform des Verfahrens enthält die zu granulierende Mischung in Schritt a) mindestens 90 Gew.%, bevorzugt mindestens 95 Gew.%, weiter bevorzugt mindestens 99 Gew.%, Calciumcarbonat und Calciumhydroxid.

Gemäß einer weiteren bevorzugten Ausführungsform des Verfahrens enthält die zu granulierende Mischung in Schritt a) mindestens 90 Gew.%, bevorzugt mindestens 95 Gew.%, weiter bevorzugt mindestens 99 Gew.%, Kalksteinmehl und Kalkhydrat. Als Kalkhydrat kann insbesondere Weißkalkhydrat eingesetzt werden.

Dabei kann ein Material mit einer hohen Reinheit erhalten werden, das sich besonders gut zur Gewinnung und/oder Aufbereitung von Trinkwasser eignet.

Gemäß einer weiteren bevorzugten Ausführungsform des Verfahrens enthält die zu granulierende Mischung in Schritt a) mindestens 40 Gew.%, bevorzugt mindestens 50 Gew.%, weiter bevorzugt mindestens 55 Gew.%, Erdalkalicarbonat, bezogen auf die Gesamtmenge an Erdalkalicarbonat und Erdalkalihydroxid.

Gemäß einer weiteren bevorzugten Ausführungsform des Verfahrens enthält die zu granulierende Mischung in Schritt a) mindestens 30 Gew.%, bevorzugt mindestens 35 Gew.%, Erdalkalihydroxid, bezogen auf die Gesamtmenge an Erdalkalicarbonat und Erdalkalihydroxid.

Weiterhin kann die zu granulierende Mischung in Schritt a) auch Erdalkalioxid enthalten.

Gemäß einer weiteren bevorzugten Ausführungsform des erfindungsgemäßen Verfahrens wird für die zu granulierende Mischung in Schritt a) Erdalkalicarbonat mit einer Korngruppe von 10 bis 125 µm und/oder Erdalkalihydroxid mit einer Korngruppe von 10 bis 125 µm und/oder Erdalkalioxid mit einer Korngruppe von 10 bis 125 µm eingesetzt. Durch Verwendung von Ausgangsmaterialien mit einer derartigen Korngruppe lässt sich ein Granulat besonders gut herstellen.

Das Granulieren in Schritt a) kann auf verschiedene dem Fachmann bekannte Arten und Weisen, beispielsweise in einer Granuliermaschine mit einem Granulierteller oder einer Granuliertrommel, durchgeführt werden.

Gemäß einer bevorzugten Ausführungsform des Verfahrens haben die in Schritt a) hergestellten Granalien des Granulats eine Korngröße von 0,5 bis 5,0 mm, bevorzugt von 0,5 bis 4 mm, weiter bevorzugt von 0,7 bis 3 mm.

Gemäß einer weiteren bevorzugten Ausführungsform der Erfindung handelt es sich bei dem gemäß Schritt a) hergestellten Granulat um ein kalkhydratgebundenes Material.

Der Calciumoxid-Gehalt in dem nach dem Schritt a) erhaltenen Granulat kann im Bereich von 10 bis 50 Gew.% Calciumoxid, bezogen auf das Gesamtgewicht des Granulats, liegen. Vorzugsweise ist das kohlenstoffdioxidhaltige Gas, mit dem das Granulat in Schritt b) und/oder in Schritt d) in Kontakt gebracht wird, ein Gas, das mindestens 30 Vol.%, insbesondere mindestens 40 Vol.%, Kohlenstoffdioxid enthält.

Um eine ausreichende Reaktionsgeschwindigkeit und gute Gleichgewichtslage für die Recarbonatisierung zu erhalten ist es vorteilhaft, wenn in mindestens einem der Schritte b) und d) das kohlenstoffdioxidhaltige Gas auf eine Temperatur von 160°C oder mehr, vorzugsweise von 180 bis 220°C, und/oder das Granulat auf etwa 60°C oder mehr, vorzugsweise von 80 bis 120°C, gebracht wird.

Als besonders günstig hat es sich dabei erwiesen für die Recarbonatisierung in mindestens einem der Schritte b) und d) das kohlenstoffdioxidhaltige Gas auf eine Temperatur von 160°C oder mehr zu bringen. Praktische Versuche haben ergeben, dass für die Recarbonatisierung in Schritt b) eine Recarbonatisierungsdauer von 2 bis 6 Stunden, insbesondere von 3 bis 5,5 Stunden ausreichen kann. Bei diesem Schritt kann der Calciumoxid-Gehalt des Granulats auf Werte von 0,5 bis 3 Gew.%, insbesondere von 0,8 bis 1,5 Gew.%, verringert werden. Vorzugsweise wird der zweite Recarbonatisierungsschritt unter im Wesentlichen gleichen Bedingungen wie der erste Recarbonatisierungsschritt durchgeführt.

Um das erfindungsgemäße Material mit niedrigem Calciumoxid-Gehalt zu erhalten wird die zweite Recarbonatisierung in Schritt d) so lange fortgesetzt bis in dem Granulat der freie Calciumoxid-Gehalt 0,3 Gew.% oder weniger beträgt. Als günstig für den zweiten Recarbonatisierungsschritt haben sich beispielsweise Recarbonatisierungsdauern von einer halben Stunde bis 5 Stunden, vorzugsweise von 1 Stunde bis 4 Stunden erwiesen.

In Schritt c) findet eine Siebung auf eine Korngruppe von 0,1 bis 1,8 mm statt. Gemäß einer bevorzugten Ausführungsform der Erfindung wird die Siebung so durchgeführt, dass ein Granulat mit einer Korngruppe von 0,2 bis 1,7 mm, insbesondere von 0,5 bis 1,6 mm und weiter bevorzugt von 0,71 bis 1,25 mm erhalten wird.

Wie oben erläutert eignet sich das mit dem erfindungsgemäßen Verfahren hergestellte Material hervorragend zur Entsäuerung, Filtration und/oder Aufhärtung von Flüssigkeiten, insbesondere von Wasser. Besonders vorteilhaft ist, dass bei seinem Einsatz auch bei neuen Filtermassen während der Einfahrphase eine Überalkalisierung vermieden werden kann.

Aufgrund seiner feinen Körnung eignet sich das Material auch hervorragend zur Behandlung von Flüssigkeiten, insbesondere Wasser, die Verunreinigungen von Eisen und/oder Mangan enthalten.

Die Erfindung wird im Folgenden anhand dreier Beispiele näher erläutert.

### Beispiel 1:

### Herstellung des erfindungsgemäßen Materials in Form von Granalien

60 Gew.% Kalksteinmehl und 40 Gew.% Weißkalkhydrat werden homogen vermischt. Die Mischung wird über eine Dosiereinrichtung einer Granuliermaschine zugeführt. Nach Zugabe von Wasser in Massenanteilen von etwa 10 bis 15 Gew.%, bezogen auf die Gesamtmenge an Kalksteinmehl, Weißkalkhydrat und Wasser, werden Granalien hergestellt. Die Korngröße kann beliebig gewählt werden, zum Beispiel 0,5 bis 5,0 mm. Bevorzugt wird eine Korngröße von ca. 1 bis 3 mm. Das so hergestellte Granulat wird in einen Trommelreaktor gegeben und durch Einleiten von auf etwa 180°C erhitztem kohlenstoffdioxidhaltigem Gas mit einem Volumenanteil an Kohlenstoffdioxid > 30 Vol.% recarbonatisiert.

Das im Granulat vorhandene freie Calciumoxid wird durch Kohlenstoffdioxid zu Calciumcarbonat umgesetzt. Dabei wird das Granulat nach entsprechender Recarbonatisierungszeit auf eine Temperatur von 110°C erhitzt. Die Recarbonatisierung wird so lange fortgesetzt, bis im Granulat nur noch ein Calciumoxid-Gehalt von etwa 2 Gew.% vorliegt. Nach Beendigung der Reaktion wird die Charge einer Siebanlage zugeführt und auf eine Korngruppe von 0,5 bis 1,6 mm abgesiebt.

Anschließend wird das Granulat in einem zweiten Recarbonatisierungsschritt auf eine Temperatur von 110°C erhitzt. Die Recarbonatisierung wird drei Stunden lang fortgesetzt bis im Granulat nur noch ein Calciumoxid-Gehalt von 0,3 Gew.% oder weniger vorliegt.

### Beispiel 2:

### Vergleich zwischen den erfindungsgemäßen Granalien gemäß Beispiel 1 und Granalien gemäß DE 195 03 913 A1

In der folgenden Tabelle werden charakteristische Parameter der erfindungsgemäßen Granalien gemäß Beispiel 1 und von Granalien, die nach dem auf Seite 2, im Beispiel der DE 195 03 913 A1 beschriebenen Verfahren hergestellt wurden, vergleichend gegenübergestellt.

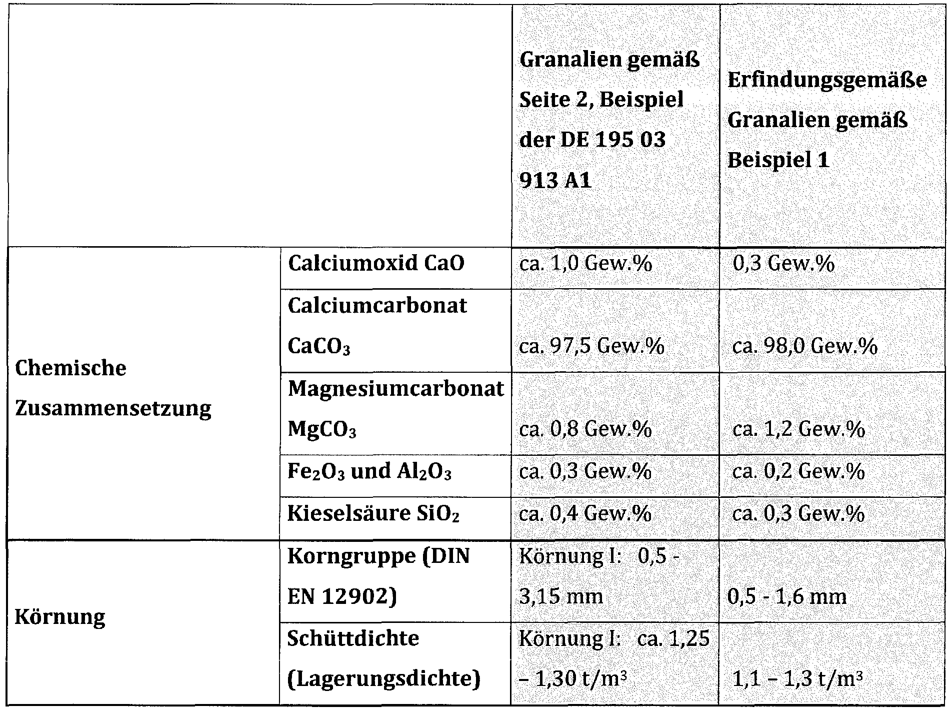

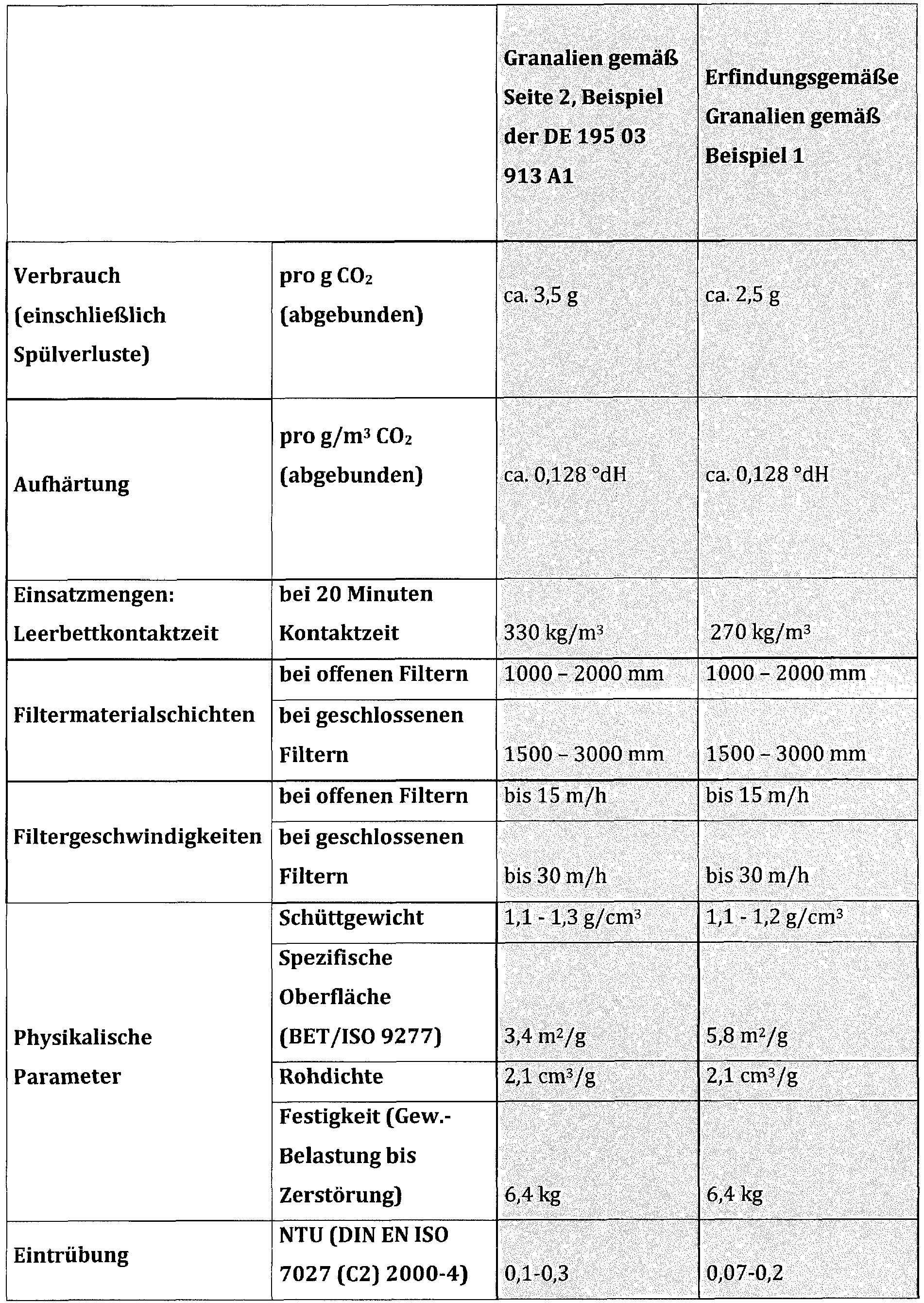

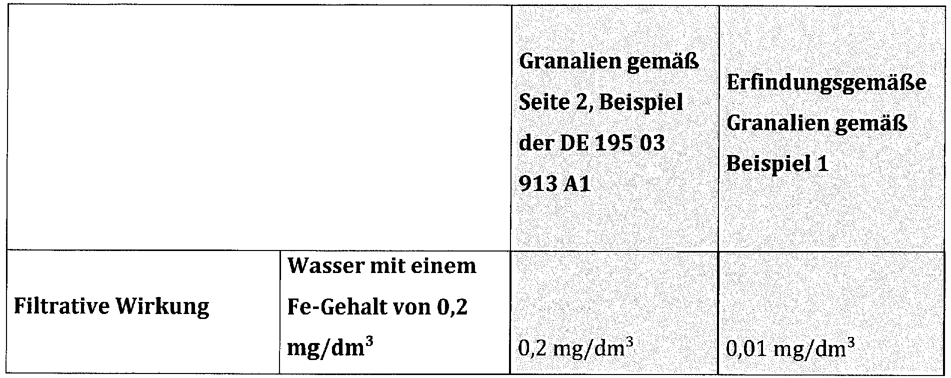

Wie der Tabelle entnommen werden kann, zeichnen sich die erfindungsgemäßen Granalien gemäß Beispiel 1 verglichen mit dem gemäß dem auf Seite 2, im Beispiel der DE 195 03 913 A1 hergestellten, bekannten Filtermaterial durch einen geringeren Calciumoxid-Gehalt und eine größere spezifische Oberfläche aus.

Ferner zeigt sich, dass mit dem erfindungsgemäßen Material gemäß Beispiel 1 verbesserte Verbrauchswerte pro Gramm abgebundenem CO₂ bei gleichzeitig verringerten Eintrübungswerten erzielt werden können. Auch ist die verbesserte filtrative Wirkung bei eisenhaltigen Wässern gut zu erkennen.

### Beispiel 3:

### Verwendung von erfindungsgemäßen Granalien gemäß Beispiel 1 für die filtrative Entsäuerung von Wasser

Das in Beispiel 1 hergestellte Material in Form von Granalien wird als chemisch reagierendes Filtermaterial in offenen und geschlossenen Festbettfiltern nach Norm DIN 19 605 für folgende Anwendungsbereiche eingesetzt:
- Entsäuerung und Filtration von Brunnen-, Quell- und/oder Oberflächenwasser
- Entsäuerung und Filtration in Verbindung mit Enteisenung und Entmanganung
- Aufhärtung von Destillat und Permeat für deren Nutzung als Trinkwasser

Bei diesen Anwendungen zeigt sich, dass auch bei einer Einfüllung großer Mengen in die Filter während der Einfahrphase keine Überalkalisierung stattfindet.

Das erfindungsgemäße Material gemäß Beispiel 1 erweist sich als hochreaktives Filtermaterial, mit dem die Anforderungen der Norm DIN EN 1018 Typ A der Trinkwasserverordnung und der Norm DIN 2000 erfüllt werden können. Nach abgeschlossener Einarbeitung und kontinuierlicher Betriebsweise werden keine Stoffe an das Wasser abgegeben, die zu einer Überschreitung von Grenzwerten der Trinkwasserverordnung führen könnten.

Darüber hinaus gewährleistet das erfindungsgemäße Material gemäß Beispiel 1 durch seine hohe Reaktionsfähigkeit, seine stabile Kornstruktur und seinen hohen chemischen und mikrobiologischen Reinheitsgrad einen sicheren, wartungsarmen und wirtschaftlich günstigen Betrieb.

## Patentansprüche

1. Material zur Entsäuerung, Filtration und/oder Aufhärtung von Flüssigkeiten, enthaltend mindestens 97 Gew.% Erdalkalicarbonat, wobei der nach der Norm DIN EN 12485:2010-08 bestimmte freie Calciumoxid-Gehalt des Materials 0,3 Gew.% oder weniger beträgt und die nach der Norm DIN EN 12902:2005-02 bestimmte Korngruppe des Materials von 0,1 bis 1,8 mm beträgt, wobei der Gehalt an Überkorn und an Unterkorn des Materials bei 10 Gew.% oder weniger, bezogen auf das Gesamtgewicht des Materials, liegt, und wobei das Material in Form von Granalien vorliegt.

2. Material nach Anspruch 1, **dadurch gekennzeichnet, dass** das in dem Material enthaltene Erdalkalicarbonat Calciumcarbonat und/oder Magnesiumcarbonat enthält.

3. Material nach Anspruch 1 oder 2, **dadurch gekennzeichnet, dass** das in dem Material enthaltene Erdalkalicarbonat mindestens 90 Gew.%, insbesondere mindestens 95 Gew.%, insbesondere 97 bis 99,9 Gew.%, Calciumcarbonat, bezogen auf die Gesamtmenge an Erdalkalicarbonat, enthält und/oder das in dem Material enthaltene Erdalkalicarbonat Magnesiumcarbonat in einer Menge von 0,01 Gew.% bis 10 Gew.%, insbesondere 0,1 Gew.% bis 5 Gew.% oder 0,2 Gew.% bis 2 Gew.%, bezogen auf die Gesamtmenge an Erdalkalicarbonat, enthält.

4. Material nach einem der voranstehenden Ansprüche, **dadurch gekennzeichnet, dass** das Material eine BET- Oberfläche von mindestens 3,5 m²/g aufweist und/oder das Material ein Schüttgewicht von 1,1 bis 1,3 g/cm³ aufweist und/oder das Material eine im Wesentlichen kugelige Kornform aufweist.

5. Verfahren zur Herstellung eines Materials umfassend folgende Schritte:
a) Granulieren einer Mischung enthaltend Erdalkalicarbonat, Erdalkalihydroxid und/oder Erdalkalioxid zu einem Granulat;
b) Recarbonatisierung des Granulats durch in Kontakt bringen mit einem kohlenstoffdioxidhaltigen Gas;
c) Siebung auf eine nach der Norm DIN EN 12902:2005-02 bestimmte Korngruppe von 0,1 bis 1,8 mm, wobei der Gehalt an Überkorn und an Unterkorn des Materials bei 10 Gew.% oder weniger, bezogen auf das Gesamtgewicht des Materials, liegt;
d) erneute Recarbonatisierung des Granulats durch in Kontakt bringen mit einem kohlenstoffdioxidhaltigen Gas,
wobei die Schritte a) bis d) nacheinander durchgeführt werden und wobei die erneute Recarbonatisierung in Schritt d) so lange fortgesetzt wird bis der nach der Norm DIN EN 12485:2010-08 bestimmte freie Calciumoxid-Gehalt des Granulats 0,3 Gew.% oder weniger beträgt.

6. Verfahren nach Anspruch 5, **dadurch gekennzeichnet, dass** das Granulieren in Schritt a) in Gegenwart einer Flüssigkeit, insbesondere Wasser, durchgeführt wird und/oder das Granulieren in Schritt a) in einer Granuliermaschine mit einem Granulierteller oder einer Granuliertrommel durchgeführt wird.

7. Verfahren nach einem der Ansprüche 5 oder 6, **dadurch gekennzeichnet, dass** die Mischung in Schritt a) mindestens 90 Gew.%, insbesondere mindestens 95 Gew.% oder mindestens 99 Gew.% Erdalkalicarbonat, Erdalkalihydroxid und/oder Erdalkalioxid enthält und/oder die Mischung in Schritt a) mindestens 90 Gew.%, insbesondere mindestens 95 Gew.% oder mindestens 99 Gew.% Erdalkalicarbonat und Erdalkalihydroxid enthält.

8. Verfahren nach Anspruch 5 bis 7, **dadurch gekennzeichnet, dass** die Mischung in Schritt a) mindestens 40 Gew.%, insbesondere mindestens 50 Gew.% oder mindestens 55 Gew.%, Erdalkalicarbonat, bezogen auf die Gesamtmenge an Erdalkalicarbonat und Erdalkalihydroxid, enthält und/oder die Mischung in Schritt a) mindestens 90 Gew.%, insbesondere mindestens 95 Gew.%, oder mindestens 99 Gew.%, Kalksteinmehl und Kalkhydrat enthält.

9. Verfahren nach einem der Ansprüche 5 bis 8, **dadurch gekennzeichnet, dass** das kohlenstoffdioxidhaltige Gas, mit dem das Granulat in Schritt b) und/oder in Schritt d) in Kontakt gebracht wird, ein Gas ist, das mindestens 30 Vol.% Kohlenstoffdioxid enthält und/oder für die Recarbonatisierung in mindestens einem der Schritte b) und d) das kohlenstoffdioxidhaltige Gas auf eine Temperatur von 160°C oder mehr, insbesondere auf eine Temperatur von 180°C bis 220°C und/oder das Granulat auf eine Temperatur von 60°C oder mehr gebracht wird.

10. Verwendung des Materials nach einem der Ansprüche 1 bis 4 zur Entsäuerung, Filtration und/oder Aufhärtung von Flüssigkeiten.

11. Verwendung nach Anspruch 10, **dadurch gekennzeichnet, dass** die Flüssigkeit Verunreinigungen von Eisen und/oder Mangan enthält und/oder die Flüssigkeit Wasser ist.

## Claims

1. A material for deacidifying, filtering, and/or hardening liquids, containing at least 97 wt.% alkaline earth carbonate, wherein the free calcium oxide content of the material, determined according to the DIN EN 12485:2010-08 standard, is 0.3 wt.% or less, and the grain size fraction of the material, determined according to the DIN EN 12902:2005-02 standard, is 0.1 to 1.8 mm, wherein the content of oversize and undersize grains in the material is 10 wt.% or less, based on the total weight of the material, and wherein the material is present in the form of granules.

2. The material according to claim 1, **characterized in that** the alkaline earth carbonate contained in the material contains calcium carbonate and/or magnesium carbonate.

3. The material according to claim 1 or 2, **characterized in that** the alkaline earth carbonate contained in the material contains at least 90 wt.%, in particular at least 95 wt.%, in particular 97 to 99.9 wt.%, calcium carbonate, based on the total quantity of alkaline earth carbonate, and/or the alkaline earth carbonate contained in the material contains magnesium carbonate in a quantity of 0.01 wt.% to 10 wt.%, in particular 0.1 wt.% to 5 wt.% or 0.2 wt.% to 2 wt.%, based on the total quantity of alkaline earth carbonate.

4. The material according to one of the preceding claims, **characterized in that** the material has a BET surface area of at least 3.5 m²/g, and/or the material has a bulk density of 1.1 to 1.3 g/cm³, and/or the material has a substantially spherical grain shape.

5. A method for producing a material, comprising the following steps:
a) granulating of a mixture containing alkaline earth carbonate, alkaline earth hydroxide, and/or alkaline earth oxide to form a granulate;
b) recarbonation of the granulate by bringing it into contact with a carbon dioxide-containing gas;
c) sieving to a grain size fraction, determined according to the DIN EN 12902:2005-02 standard, of 0.1 to 1.8 mm, wherein the content of oversize and undersize grains in the material is 10 wt.% or less, based on the total weight of the material;
d) renewed recarbonation of the granulate by bringing it into contact with a carbon dioxide-containing gas,
wherein the steps a) to d) are carried out in succession, and wherein the renewed recarbonation in step d) is continued until the free calcium oxide content of the granulate, determined according to the DIN EN 12485:2010-08 standard, is 0.3 wt.% or less.

6. The method according to claim 5, **characterized in that** the granulating in step a) is carried out in the presence of a liquid, in particular water, and/or the granulating in step a) is carried out in a granulating machine having a disk granulator or a granulation drum.

7. The method according to one of claims 5 or 6, **characterized in that** the mixture in step a) contains at least 90 wt.%, in particular at least 95 wt.%, or at least 99 wt.%, alkaline earth carbonate, alkaline earth hydroxide, and/or alkaline earth oxide, and/or the mixture in step a) contains at least 90 wt.%, in particular at least 95 wt.%, or at least 99 wt.%, alkaline earth carbonate and alkaline earth hydroxide.

8. The method according to claims 5 to 7, **characterized in that** the mixture in step a) contains at least 40 wt.%, in particular at least 50 wt.%, or at least 55 wt.%, alkaline earth carbonate, based on the total quantity of alkaline earth carbonate and alkaline earth hydroxide, and/or the mixture in step a) contains at least 90 wt.%, in particular at least 95 wt.%, or at least 99 wt.%, pulverized limestone and lime hydrate.

9. The method according to one of claims 5 to 8, **characterized in that** the carbon dioxide-containing gas with which the granulate is brought into contact in step b) and/or in step d) is a gas that contains at least 30 vol.% carbon dioxide, and/or for the recarbonation in at least one of steps b) and d) the carbon dioxide-containing gas is brought to a temperature of 160°C or greater, in particular to a temperature of 180°C to 220°C, and/or the granulate is brought to a temperature of 60°C or greater.

10. The use of the material according to one of claims 1 to 4 for deacidifying, filtering, and/or hardening liquids.

11. The use according to claim 10, **characterized in that** the liquid contains impurities of iron and/or manganese, and/or the liquid is water.

## Revendications

1. Matériau de désacidification, de filtration et/ou de durcissement de liquides, comprenant au moins 97 % en poids de carbonate alcalino-terreux, la teneur en oxyde de calcium libre du matériau déterminée selon la norme DIN EN 12485:2010-08 s'élevant à 0,3 % en poids ou moins, et le groupe de grains du matériau déterminé selon la norme DIN EN 12902:2005-02 s'élevant de 0,1 à 1,8 mm, la teneur en grains trop gros et en grains trop petits du matériau étant de 10 % en poids ou moins, par rapport au poids total du matériau, et le matériau présentant une forme de granules.

2. Matériau selon la revendication 1, **caractérisé en ce que** le carbonate alcalino-terreux compris dans le matériau comprend du carbonate de calcium et/ou du carbonate de magnésium.

3. Matériau selon la revendication 1 ou 2, **caractérisé en ce que** le carbonate alcalino-terreux compris dans le matériau comprend au moins 90 % en poids, en particulier au moins 95 % en poids, en particulier 97 à 99,9 % en poids de carbonate de calcium, par rapport à la quantité totale de carbonate alcalino-terreux, et/ou **en ce que** le carbonate alcalino-terreux compris dans la matériau comprend du carbonate de magnésium en une quantité de 0,01 % en poids à 10 % en poids, en particulier de 0,1 % en poids à 5 % en poids ou de 0,2 % en poids à 2 % en poids par rapport à la quantité totale de carbonate alcalino-terreux.

4. Matériau selon l'une des revendications précédentes, **caractérisé en ce que** le matériau présente une surface BET d'au moins 3,5 m²/g et/ou **en ce que** le matériau présente une densité apparente de 1,1 à 1,3 g/cm³ et/ou **en ce que** la matériau présente une forme de grain essentiellement sphérique.

5. Procédé de fabrication d'un matériau comprenant les étapes suivantes :
a) granulation d'un mélange comprenant du carbonate alcalino-terreux, de l'hydroxyde alcalino-terreux et/ou de l'oxyde alcalino-terreux en un granulat ;
b) recarbonatation du granulat en le mettant en contact avec un gaz comprenant du dioxyde de carbone ;
c) criblage d'un groupe de grains de 0,1 à 1,8 mm déterminé selon la norme DIN EN 12902:2005-02, la teneur en grains trop gros et en grains trop petits du matériau étant de 10 % en poids ou moins, par rapport au poids total du matériau ;
d) nouvelle recarbonatation du granulat en le mettant en contact avec un gaz comprenant du dioxyde de carbone,
les étapes a) à d) étant effectuées les unes après les autres, et la nouvelle recarbonatation à l'étape d) se poursuivant jusqu'à ce que la teneur en oxyde de calcium libre du granulat déterminée selon la norme DIN EN 12485:2010-08 s'élève à 0,3 % en poids ou moins.

6. Procédé selon la revendication 5, **caractérisé en ce que** la granulation à l'étape a) est effectuée en présence d'un liquide, en particulier d'eau, et/ou **en ce que** la granulation à l'étape a) est effectuée dans une machine de granulation au moyen d'une assiette de granulation ou d'un tambour de granulation.

7. Procédé selon l'une des revendications 5 ou 6, **caractérisé en ce que** le mélange à l'étape a) comprend au moins 90 % en poids, en particulier au moins 95 % en poids ou au moins 99 % en poids de carbonate alcalino-terreux, d'hydroxyde alcalino-terreux et/ou d'oxyde alcalino-terreux et/ou le mélange à l'étape a) comprend au moins 90 % en poids, en particulier au moins 95 % en poids ou au moins 99 % en poids de carbonate alcalino-terreux et d'hydroxyde alcalino-terreux.

8. Procédé selon la revendication 5 à 7, **caractérisé en ce que** le mélange à l'étape a) comprend au moins 40 % en poids, en particulier au moins 50 % en poids ou au moins 55 % en poids de carbonate alcalino-terreux, par rapport à la quantité totale de carbonate alcalino-terreux et d'hydroxyde alcalino-terreux, et/ou le mélange à l'étape a) comprend au moins 90 % en poids, en particulier au moins 95 % en poids, ou au moins 99 % en poids de calcaire en poudre et d'hydrate de calcaire.

9. Procédé selon l'une des revendications 5 à 8, **caractérisé en ce que** le gaz comprenant du dioxyde de carbone, avec lequel le granulat à l'étape b) et/ou à l'étape d) est mis en contact, est un gaz qui comprend au moins 30 % en volume de dioxyde de carbone et/ou **en ce que**, pour la recarbonatation à au moins l'une des étapes b) et d), le gaz comprenant du dioxyde de carbone est porté à une température de 160 °C ou plus, en particulier à une température de 180 °C à 220 °C et/ou **en ce que** le granulat est porté à une température de 60 °C ou plus.

10. Utilisation du matériau selon l'une des revendications 1 à 4, pour la désacidification, la filtration et/ou le durcissement de liquides.

11. Utilisation selon la revendication 10, **caractérisée en ce que** le liquide contient des impuretés de fer et/ou de manganèse et/ou **en ce que** le liquide est de l'eau.
